Europäisches Patentamt

European Patent Office

Office européen des brevets

(11) Publication number: **0 319 231**
**A1**

## (12) EUROPEAN PATENT APPLICATION

(21) Application number: **88311261.7**

(22) Date of filing: **28.11.88**

(51) Int. Cl.4: **F16L 37/00**

(30) Priority: **28.11.87 IE 2596/87**

(43) Date of publication of application:
**07.06.89 Bulletin 89/23**

(84) Designated Contracting States:
**AT BE CH DE ES FR GB GR IT LI LU NL SE**

(71) Applicant: **BRIDGEFORD LIMITED**
**Garranemore**
**Pallas Green County Limerick(IE)**

(72) Inventor: **O'Dwyer, Cornelius**
**Garranemore**
**Pallas Green County Limerick(IE)**

(74) Representative: **Hackett, Sean James et al**
**Marks & Clerk 57-60 Lincoln's Inn Fields**
**London WC2A 3LS(GB)**

(54) **A connector.**

(57) A connector (1) for line couplings of a fluid powered system has a supply mounting support (2) carrying a number of supply couplings (3) and a take-off mounting support (4) carrying a number of take-off couplings (5). A ram (7) is mounted on the supply mounting support (2) and comprises a cylinder (15) housing a double acting piston (16) with a con-rod (22) extending outwardly therefrom. A male catch member (6) is fixed at an outer end of the con-rod (22) for releasable engagement in a socket (8) forming a receiver in the take-off mounting support (4). The ram (7) is operable by fluid supplied from a supply line of the fluid system to engage the male member (6) in the socket (8) to draw the mounting supports (2, 4) together to engage the take-off couplings (5) with the supply couplings (3).

EP 0 319 231 A1

## A CONNECTOR

The invention relates to a connector for fluid system couplings. The invention is particularly concerned with hydraulic and pneumatic couplings but is applicable to any form of fluid coupling.

One of the major problems with connecting a large number of service lines to a supply is that each coupling has to be individually manually engaged in the correct sequence. The term "line" as used throughout this specification in relation to a fluid system is taken to mean the conduit, hose, pipe or any other means by which fluid is carried throughout the fluid system. In existing quick release couplings, the valves which seal two parts of a coupling against loss of fluid and the ingress of foreign matter when in the disengaged position, are subject to pressures obtaining in their respective line systems. Engagement of the coupling parts will require the displacement of the sealing valves against any such residual pressure. Consequently residual pressure in any of the lines being connected will make engagement difficult, and above a certain value, engagement will be impossible until the pressure is relieved.

Many quick release couplings have a sleeve which controls the retaining ball-bearings, the said sleeve has to be pushed against a return spring with one hand, while the coupling parts are simultaneously engaged with the other hand. Given the spillage characteristics of quick release couplings, which leads to messy and slippery handling conditions, and with the close groupings in which couplings are often mounted, engagement and disengagement becomes an undesirable task, even in the best ambient conditions.

Screw-on type couplings have advantages over quick-release couplings in some respects, but they retain the disadvantages of being laborious, time consuming, and requiring individual handling at the coupling point.

When there are a large number of service lines or supply lines to be connected by individual take-off couplings to a number of supply couplings each individually connected to a separate pressurized supply line, the problem of engagement is multiplied and it becomes a difficult and time consuming task. Similar problems arise on disengagement. It is also necessary for the operator to engage or disengage each coupling separately at the coupling since it is not possible to carry out the engagement or disengagement remotely from a cab or operating platform.

Ideally all the supply and take-off couplings should be engaged or disengaged simultaneously and preferably such operation should be effected from a control point, and remote from the couplings, the established order of engagement being assured each time.

The present invention is directed towards providing a connector which allows this to be achieved.

According to the invention there is provided a connector for line couplings of a fluid powdered system of the type comprising a supply mounting support for a supply coupling connected to a fluid supply line and a take-off mounting support for a take-off coupling connected to a fluid take-off line and engagement means for moving the mounting supports relative to each other to engage and disengage the couplings characterised in that the engagement means is operated by the fluid in a supply line.

In one embodiment of the invention the engagement means is one the supply mounting support and comprises a ram including a cylinder and a double acting piston having front and rear faces, the piston dividing the cylinder into a front chamber and a rear chamber, and having a con-rod and catch means on the front face of the piston for cooperation with a receiver formed in the take-off mounting support.

In another embodiment the fluid supply line is connected through a non-return valve to the front chamber of the cylinder and the rear chamber is vented into a storage reservoir of the system and valve means provided for fluid pressure equalisation within the cylinder.

In a further embodiment there is provided an alternating valve having an open outlet and a pair of valved inlets, one of which is closed when the fluid pressure applied to that inlet is greater than the pressure applied to the other inlet and in which each inlet is connected to two supply lines, the pair together forming a system feed and return, and in which the outlet is connected to the rear chamber of the cylinder and additionally each supply line is connected by a non-return valve to the front chamber of the cylinder. Typically the alternating valve includes a bore with a valve seat formed at each end communicating intermediate its ends with an outlet port, a pair of valve heads interconnected by a spindle within the bore, the length of which spindle is such as to prevent both valve heads seating simultaneously, and the cross-sectional area of the spindle relative to the bore being such as to permit the free flow of fluid therebetween.

In another embodiment intermediate the outlet of the alternating valve and the rear chamber there is provided a shut-off valve openable only within a preset range of a ram disengagement pressures.

Preferably the shut-off valve comprises: an inlet bore communicating with an outlet bore; a flow restrictor in one of the bores; a transverse bore across the outlet bore, one end of which communicates with the inlet bore the transverse bore housing in a fluid tight manner a slidable plug spring biased against the fluid pressure from the inlet bore, the body of the plug at a transfer position intermediate its ends being so formed as to permit the flow of fluid across the transverse bore when the transfer position is aligned with the outlet bore; and a non-return valve in the outlet bore between the transverse bore and the rear chamber communicating with the inlet bore.

In a further embodiment there is incorporated a pressure stabilising expansion device for the rear of the cylinder. Preferably the pressure stabilising expansion device comprises a spring loaded piston mounted in the cylinder remote from the rear face of the piston.

In another embodiment the catch means comprises a male member having a male body portion and an outer expansion member movable outwards on retraction of the piston for engagement within a socket forming the receiver.

In a particularly preferred embodiment the male member comprises: a cylindrical body; a head formed on its free end of frusto conical shape; and a circumferential groove rearward of the head the depth of which reduces towards the head, and in which the outer expansion member comprises: a sleeve slidable on the cylindrical body, the sleeve retaining a plurality of ball bearings within the groove by a series of circumferentially arranged holes in the sleeve, the diameter of the ball bearings being greater than the diameter of the holes and of the depth of the groove; and an outwardly biased rubbing ring on the sleeve for engagement within the supply mounting support.

In another embodiment the catch means comprises a flange mounted on the con-rod and the receiver is an open slot in a plate forming part of the take-off mounting support.

The invention will be more clearly understood from the following description of some embodiments thereof given by way of example only, with reference to the accompanying drawings in which;

Fig. 1 is a perspective partially cut-away view of a connector according to the invention,

Fig. 2 is a side cross sectional view of the connector,

Figs. 3a to 3d show side sectional views of the connector similar to Fig. 2, illustrating the coupling sequence for the connector,

Fig. 4 is an end view of a supply mounting flange forming portion of the connector,

Fig. 5 is a sectional view along the lines V-V of Fig. 4,

Fig. 6 is a sectional view along the lines VI-VI of Fig. 5,

Fig. 7 is a side sectional view similar to Fig. 2 of a connector according to another embodiment of the invention,

Fig. 8 is a side sectional view similar to Fig. 2 of a connector according to a further embodiment of the invention,

Fig. 9 is a diagrammatic view of a shut-off valve forming portion of a connector according to another embodiment of the invention,

Fig. 10 is a view similar to Fig. 6 showing the shut-off valve of Fig. 9 in combination with an alternating valve also forming portion of the connector,

Fig. 11 is a front partially cut-away view of a supply mounting flange of the connector of Fig. 11 illustrating the arrangement of the shut-off valve on the supply mounting support,

Fig. 12 is a side sectional view of a connector according to another embodiment of the invention, and

Fig. 13 is a perspective view of a take-off mounting support of the connector of Fig. 12.

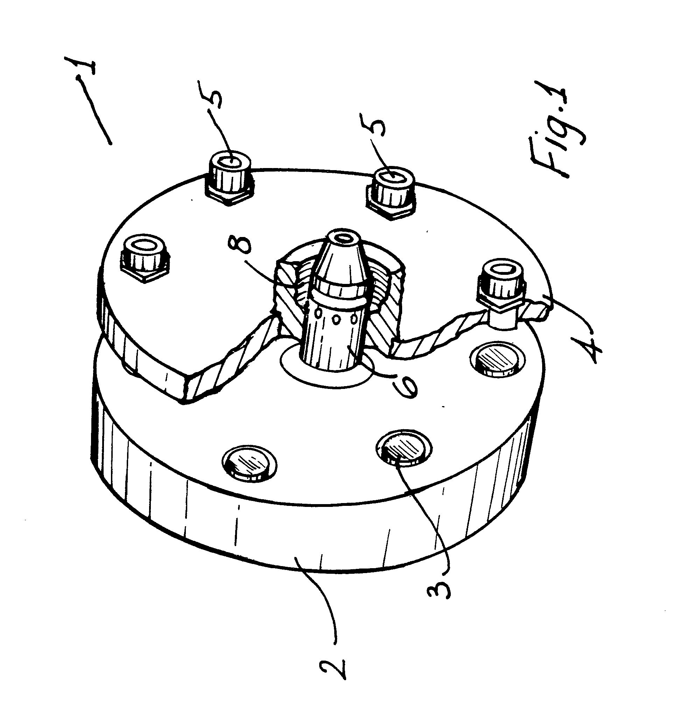

Referring to the drawings and initially to Figs. 1 to 6 thereof, there is illustrated a connector according to the invention indicated generally by the reference numeral 1, for simultaneously engaging or disengaging a plurality of two part couplings for hydraulic service lines of a hydraulic powdered system comprising a supply mounting support 2 for supply couplings 3 connected to fluid supply lines, and a take-off mounting support 4 for take-off couplings 5. Engagement means for moving the mounting supports 2, 4 together and apart for engaging and disengaging the couplings 3, 5 is provided. In this embodiment the engagement means comprises a male member 6 secured by a centrally located ram assembly 7 on the supply mounting support 2 and is movable thereon into a female socket 8 forming a receiver on the take-off mounting support 4.

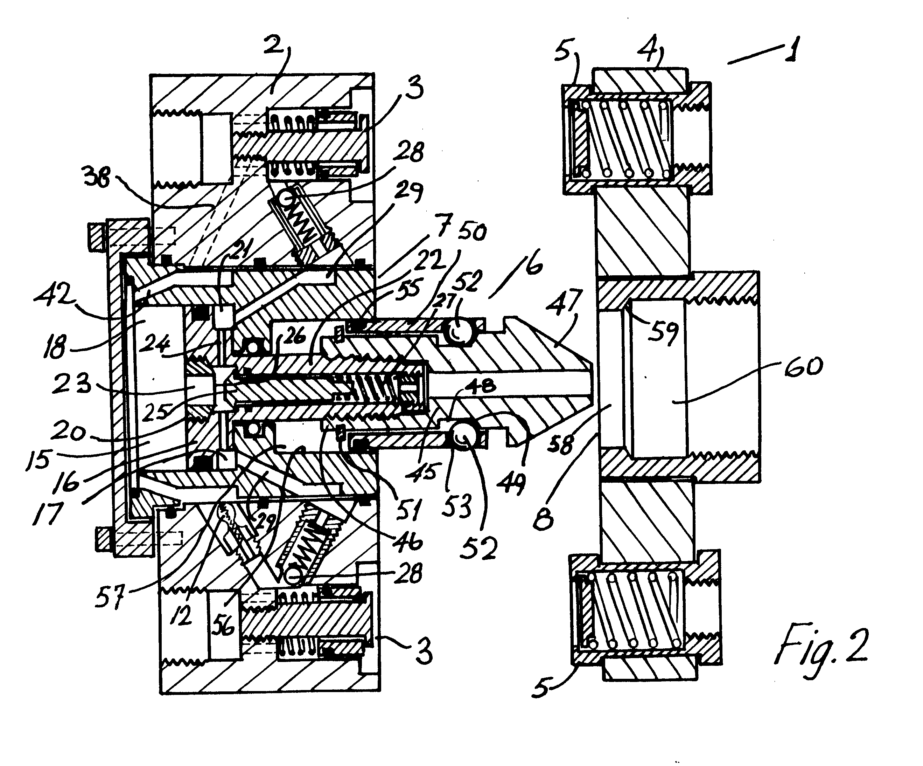

The ram assembly 7 comprises a cylinder 15 housing a double acting piston 16, the piston 16 dividing the cylinder 15 into a front chamber 17 and a rear chamber 18, having a rear face 20 and a front face 21 with a con-rod 22 extending from the front face 22 and having the male member 6 mounted at its free end. Both sides of the piston 16 are interconnected by a bore 23 and radially arranged through passages 24 in the piston 16. The bore 23 is closed by a valve 25 (shown in an open position in Fig. 2) housed within the con-rod 22 biased against a valve seat 26 in the bore 23 by a spring 27. Non-return valves 28 located in the supply mounting support 2 connect each fluid supply coupling 3 and hence its associated supply line to the front chamber 17 of the cylinder 15 via through passages 29 in the body of the ram assembly 7.

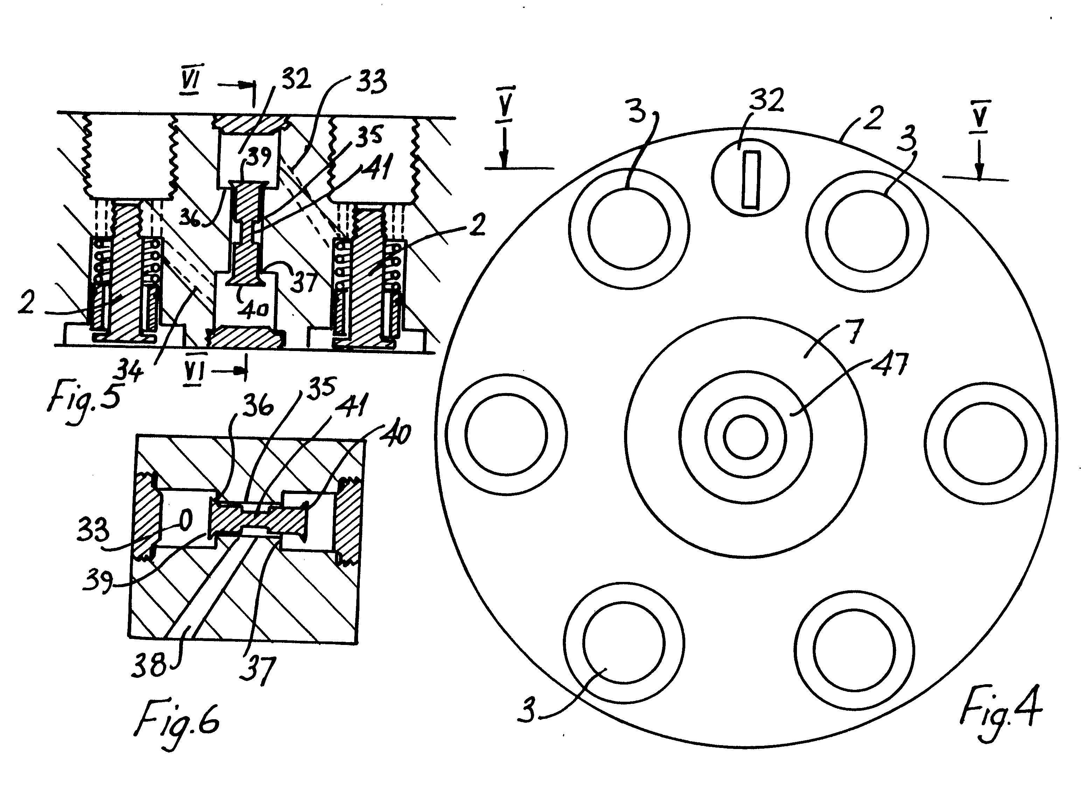

Referring now to Figs. 4 to 6 there is illustrated an alternating valve 32 mounted on the supply mounting support 2 between a pair of supply couplings 3, on supply lines which together form the system feed and return, to which the alternating valve 32 is connected via ducts 33 and 34 respectively, shown by interrupted lines in Fig. 5. The alternating valve 32 includes a bore 35 with valve seats 36, 37 formed at each end and communicating intermediate its ends with an outlet port 38. A pair of valve heads 39 and 40 are interconnected by a spindle 41 within the bore 35, the length of the spindle 41 being such as to prevent both valve heads 39, 40 seating simultaneously, and the cross-sectional area of the spindle 41 relative to the bore 35 being such as to permit the free flow of fluid therebetween. It will be noted that the outlet port 38 connects via a through passage 42 to the rear chamber 18 of the cylinder 15, the outlet port 38 being illustrated by interrupted lines in Fig. 2.

A bleed-off leakage valve 12 is also provided but is only required if more than two supply couplings 3 are connected to the return line of the hydraulic system.

The male member 6 has a cylindrical body 45 with an inner end 46 attached to the con-rod 22 and a frusto conical head 47 at its outer free end. There is a circumferential groove 48 formed in the body 45 rearwardly of the head 47, the depth of the groove 48 reducing towards the head by means of a sloping forward face 49. A sleeve 50 is slidably mounted on the body 45 for movement between the head 47 and a retaining circlip 51 at the inner end 46 of the body 45. A plurality of ball bearings 52 are retained within the groove 48 by a series of circumferentially arranged holes 53 in the sleeve 50, the diameter of the ball bearings 52 being greater than the diameter of the holes 53 and of the depth of the groove 48. An outwardly biased rubbing ring 55 is mounted at an inner end of the sleeve 50 for engagement with a side wall 56 of a recess 57 of the supply mounting support 2. The socket 8 has a front opening 58 with a step 59 leading outwardly therefrom to a recess 60 in the socket 8.

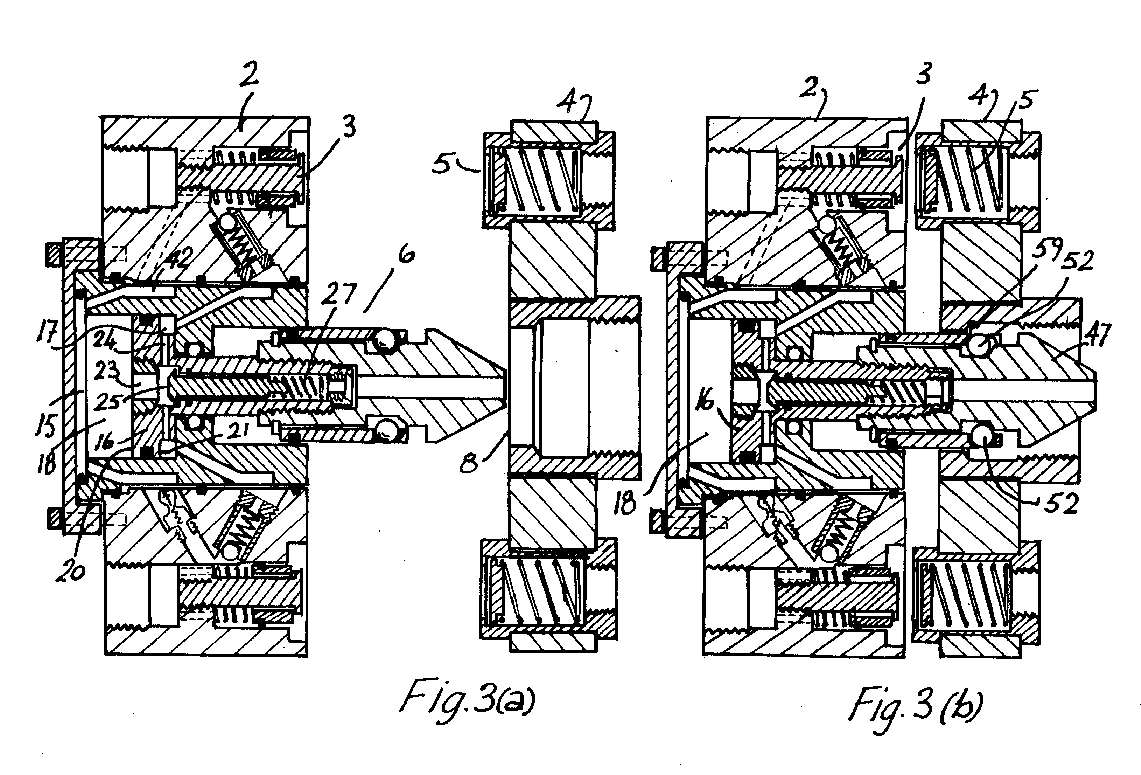

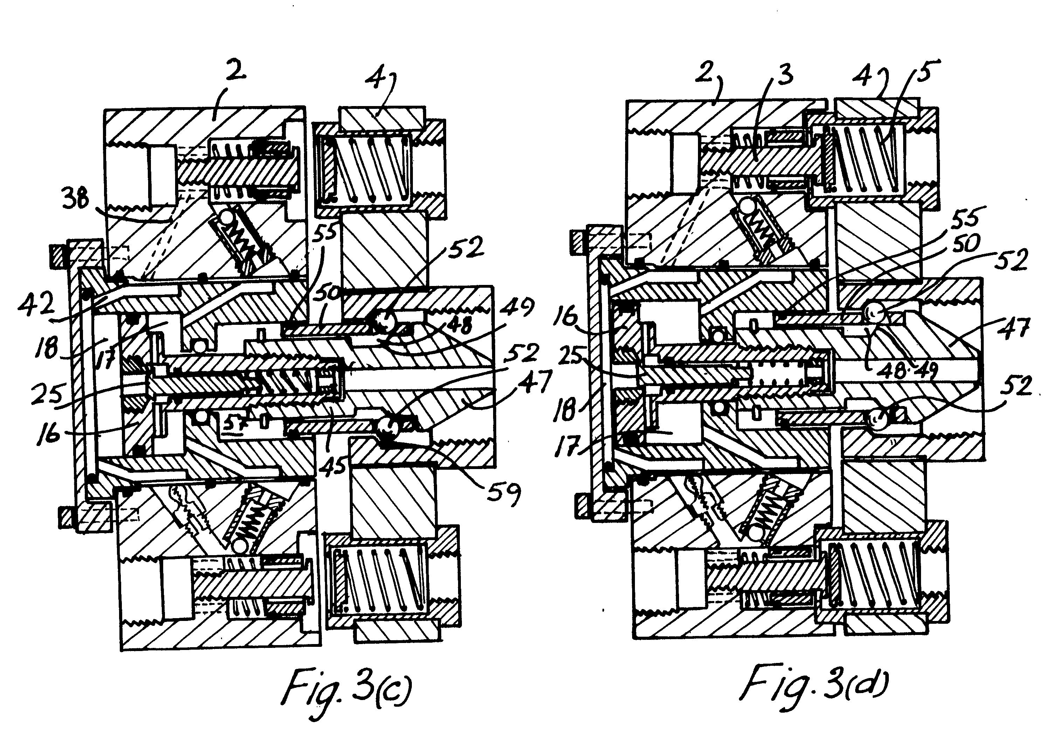

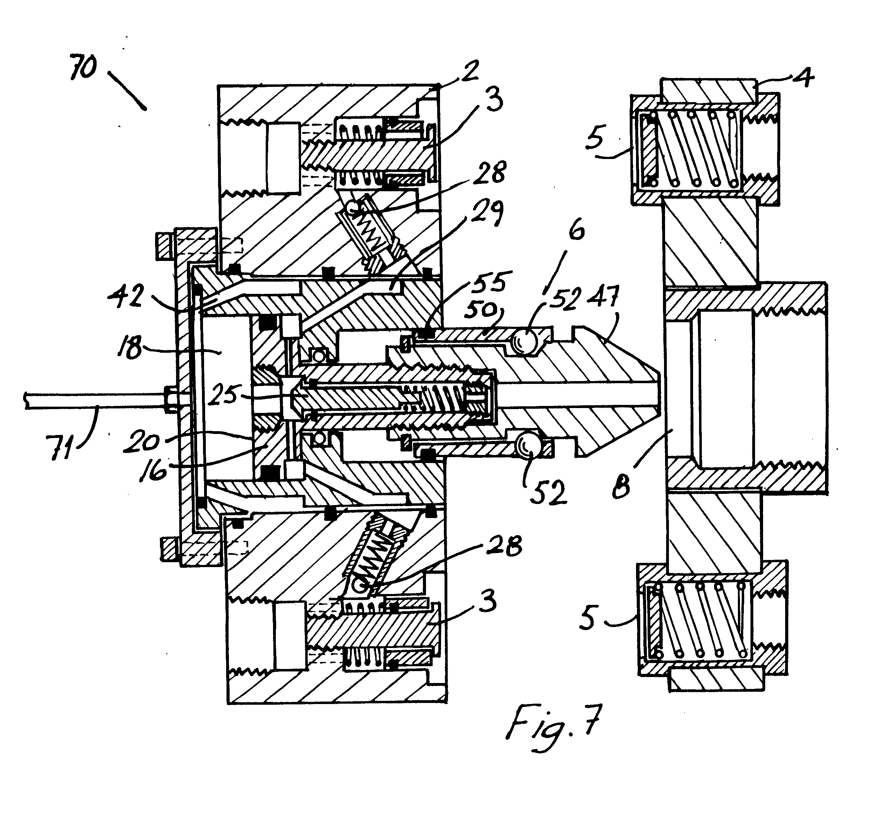

In use, referring to Figs. 3a to 3d, which illustrate the connection sequence the male member 6 is moved outwardly of the supply mounting support 2 (Fig. 3a), this is effected by pressurising in any convenient manner both hydraulic supply lines connected to the ram assembly 7 through the alternating valve 32. With both supply couplings 3, which are connected to the alternating valve 32 having a supply of pressurised hydraulic fluid and since both valve heads 39,40 may not close against the pressurised fluid received though the ducts 33, 34 at the same time either one valve 39,40 will be fully open, or both valves 39,40 will be partially open. Figs. 5 and 6 show the valve 39 closed and valve 40 open. Either way fluid at a preset disengagement pressure will be delivered into the outlet port 38 and from thence through the passage 42 to the rear chamber 18 of the cylinder 15. Pre-set hydraulic pressure at the rear of the piston 16 will be sufficient to overcome the pressure of the spring 27 and open the valve 25, and as the pressure acting on both sides of the piston 16 will then be equal and the effective pressurised area on the rear face 20 of the piston 16 is greater than the effective pressurised area on the front face 21 of the piston 16 the piston will move forward, displaced oil from the front side of the piston 16 moving via the through holes 24 and bore 23 to the rear of the piston 16. The male member 6 is now in the fully extended position and the supply mounting support 2 and male member 6 are offered up to the socket 8, the head 47 being inserted into the socket 8 until the ball bearings 52 have passed the step 59 (see Fig. 3b). The pair of complementary fluid supply lines are returned to their normal mode of operation in which one of the supply lines acts as a return to a head tank (not shown) of the hydraulic system. Now hydraulic fluid at the rear of the piston 16 can escape via the through passage 42 and via the alternating valve 32 to the hydraulic supply line acting as the return line. Referring briefly to Figs. 5 and 6 in the position illustrated the hydraulic fluid would pass through the port 38 and via the bore 35 and duct 34 to the hydraulic supply coupling 3 on the return line. With pressure relieved at the rear of the piston 16 the pressure on all service lines will drop, the valve 25 closes under spring pressure and with hydraulic fluid supplied via the non-return valve 28 to the front chamber 17, the piston 16 is moved in a rearward direction (see Fig. 3c) pulling the body 45 of the male member 6 in a rearward direction. However, tension between the rubbing ring 55 and the side wall 56 of the recess 57 is such that the sleeve 50 is held from moving rearwards thus causing the ball bearings 52 to be pushed up the front face 49 of the groove 48 of the body 45 as it is pulled back into the supply mounting support 2 so that the ball bearings 52 will stand proud of the sleeve 50 resting against the step 59 of the socket 8.

As the piston 16 and body 45 continue in a rearward direction the sleeve 50 abuts the head 47 of the body 45 and is then pulled with the body 45 back into the recess 57, the ball bearings 52 abutting the step 59 pulling the take-off mounting support 4 towards the supply mounting support 2 and engaging the couplings 3, 5 (see Fig. 3d). During normal operation of the hydraulic system hydraulic pressure acting on the front face 21 of the piston 16 maintains the piston 16 at the rear of the cylinder 15 and keeps the supply couplings 3 and take-off couplings 5 locked together. Disengagement can be effected by again pressurising both of the complementary fluid supply lines thus extending the male member 6 to its outermost position (see Fig. 3b), and the mounting supports 2, 4 can then be moved apart.

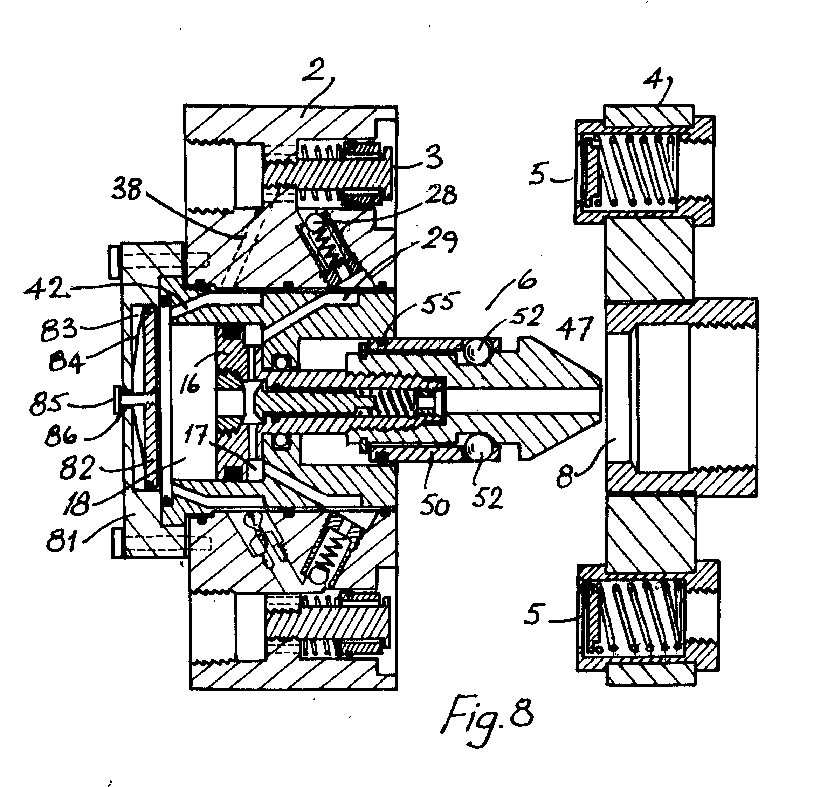

Referring now to Fig. 7 there is illustrated a connector 70 according to another embodiment of the invention which is largely similar to the connector described with reference to Figs. 1 to 6 and like parts are assigned the same reference numeral. In this case no alternating valve is provided on the supply mounting support 2 and instead an extra hydraulic supply line 71 is fitted connecting to the rear chamber 18 of the cylinder 15 and leading to ahead tank (not shown) of the hydraulic system. This line 71 would evacuate hydraulic fluid at the rear of the piston 16 during engagement of the mounting supports 2, 4 and drain off any leakages during normal operation, and effect disengagement of the mounting supports 2, 4 by introducing pressurised fluid through the line 71 to the rear chamber 18 when required. This embodiment is not preferred for remote applications.

Referring now to Fig. 8 there is illustrated a connecting device indicated generally by the reference numeral 80 according to another embodiment of the invention, being largely similar to the connecting device previously described with reference to Figs. 1 to 6 and like parts are assigned the same reference numerals. In this case the rear of the cylinder 15 is closed by a cover plate 81 which incorporates a pressure stabilising expansion device, in this case comprising a buffer piston 82 mounted within a cylindrical recess 83 in the end cover 81. Between the rear of the buffer piston 82 and the end cover 81 is a spring 84 and the buffer piston 82 is held within the recess 83 against spring pressure by a bolt 85 which loosely extends through a hole 86 in the end cover 81 to the buffer piston 82. The pressure absorbing device provides an expansion space for the volume of fluid which becomes sealed in the system, which includes the volume in the rear of the piston 16 via the alternating valve 32, when both complementary fluid supply lines are isolated by the controls. Expansion and pressure balancing may occur, for example, when an external load is unloaded.

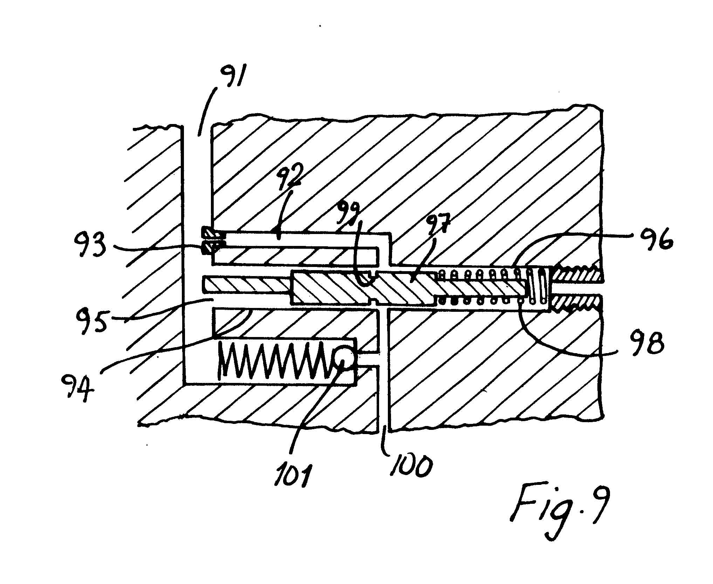

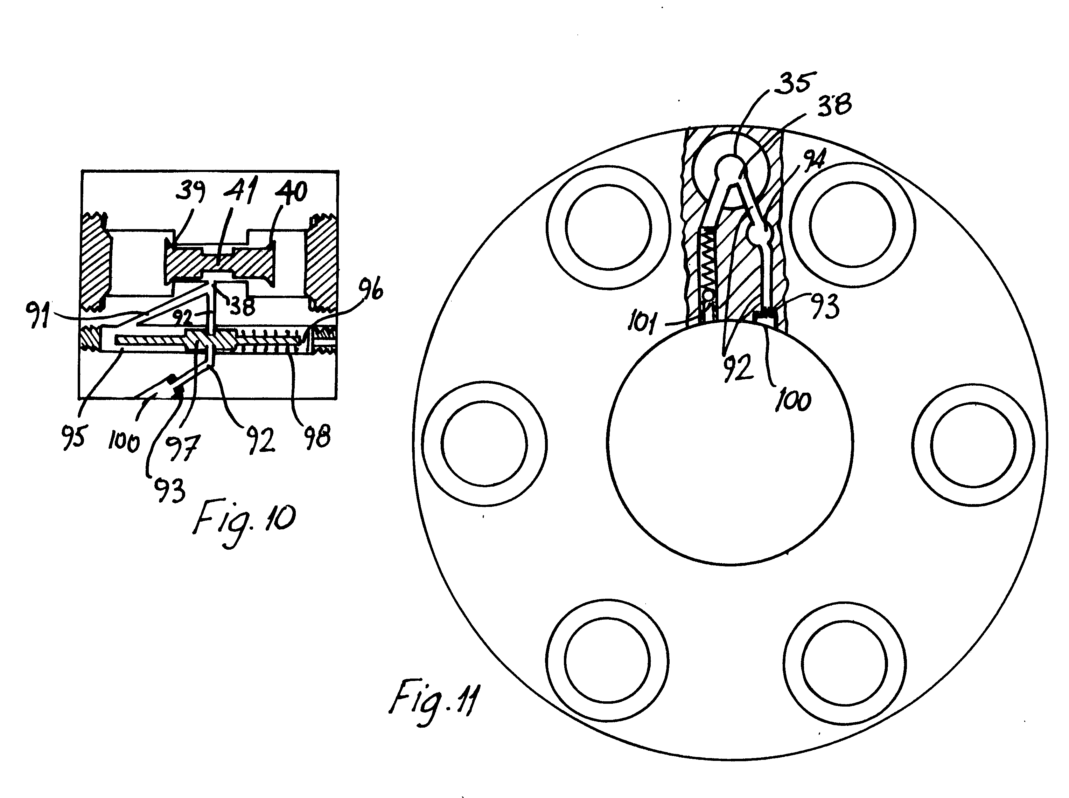

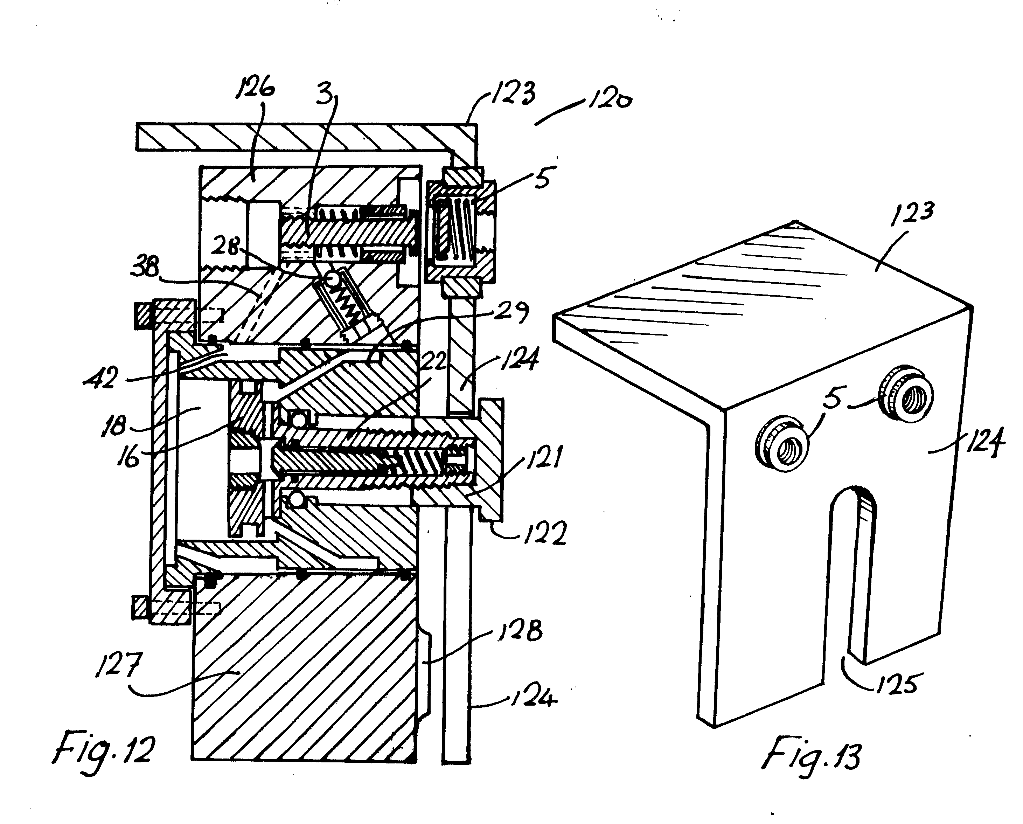

Referring now to Figs. 9 to 11 there is illustrated portion of a connector according to another embodiment of the invention which is largely similar to the connector described previously with reference to Fig. 8 and like parts are assigned the same reference numerals. In this embodiment there is provided a shut-off valve, openable only within a pre-set range of ram disengagement pressures, mounted intermediate the outlet port 38 of the alternating valve 32 and the through passage 42 to the rear chamber 18 of the cylinder 15. Illustrated diagrammatically in Fig. 11 the shut off valve comprises an inlet bore 91 communicating with an outlet bore 92 having a flow restrictor 93. A transverse bore 94 extends across the outlet bore 92, and has an inner end 95 which communicates with the inlet bore 91 and an outer end 96 which is vented to atmosphere. A slidable plug 97 engages the transverse bore 94 in fluid tight manner and is biased by a spring 98 against fluid pressure from the inlet bore 91. The plut 97 has a transfer position intermediate its ends in this case comprising a circumferential slot 99. A lower end 100 of the outlet bore 92 leads to the through passage 42 which connects to the rear chamber 18 of the cylinder 15. A non-return valve 101 connects the through passage 42 to the inlet bore 91.

In use the inlet bore 91 will be connected through the alternating valve 32 to the return line of the fluid system. If the pressure in the return line is at nominal zero the plug 97 will be in the position shown in Fig. 9 blocking the outlet bore 92 with the slot 99 to the left of the outlet bore 92, the spring 98 urging the plug 97 towards the inner end 95 of the transverse bore 94. If the return line becomes pressurised fluid acting on the plug 97 urges it towards the outer end 96 of the transverse bore 94 against spring pressure and will still block the outlet bore 92. Only at the preset range of ram disengagement pressures will the hydraulic fluid acting on the plug 97 balance the spring 98 such that the slot 99 is aligned with the outlet bore 92 allowing through passage of hydraulic fluid from the inlet bore 91 through the outlet bore 92 and flow restrictor 93 to the rear chamber 18 of the cylinder 15 for disengagement. This disengagement pressure must be maintained in the return line for a preset period to fill behind the piston 16 so as to generate disengagement pressure to open the valve 25 and allow disengagement and flow of fluid through the piston 16. It will be noted that while the slot 99 will momentarily align with the outlet bore 92 as the plut 97 moves back and forth in the transverse bore 94 in accordance with fluctuating pressures in the return line of the hydraulic system the flow restrictor 93 ensures only a small amount of fluid passes to the rear of the piston 19 and this would not be sufficient to open the valve 25. This extra fluid is accommodated by the pressure stabilising expansion device until the pressure in the return line drops and the fluid will then be returned via the non-return valve 101 to the return line. It will be appreciated that this shut-off valve will protect against unintentional disengagement of the connector during operation even if the return line pressures are far in excess of the disengagement pressure.

Referring now to Figs. 12 and 13 there is illustrated a connector 120 according to another embodiment of the invention which is largely similar to the connector described with reference to Figs. 1 to 6 and like parts are assigned the same reference numerals. In this case the engagement means comprises a cylindrical body 121 mounted at an outer end of the con-rod 22, the body 121 having a flanged outer end 122. The take-off mounting support has an L-shaped plate 123 with a vertical side 124 on which a pair of take-off couplings 5 are mounted. A slot 125 is formed in a lower end of the vertical face 124. In this case a supply mounting support 126 is provided having a lower end 127 without any couplings 3. The lower end 127 has an outwardly projecting portion 128 which abuts the vertical face 124 when the supply and take-off couplings 3, 5 are fully engaged.

In use, the plate 123 would be attached to an implement such as a digger bucket and the supply mounting support 126 with the male member extended is pivoted so that the body 121 engages in the slot 125. By withdrawing the piston 16 as previously described the flanged end 122 will abut the plate 123 and pull the plate 123 towards the supply mounting support 126 engaging the take off couplings 5 with supply couplings 3.

The invention provides a connector for connecting a plurality of hydraulic service line couplings. As the ram uses service line pressure and as the effective pressurised area of the ram is greater than the combined effective pressurised areas of the service line couplings, positive engagement of the supply couplings is ensured and they are securely held together during normal operation.

It will be appreciated that the power unit of the connector is basically a double acting ram, which is caused to extend and retract in the manner hereinbefore described. If an external system of one or more rams is connected in parallel with the connector ram the external system will act in tandem with the connector ram. This external system may then be utilised to accomplish the mechanical attachment of a machine or implement while the connector simultaneously engages the hydraulic services. The combination of connector and the external system can provide complete automation in the attachment of hydraulically operated machines and implements. An advantage of the arrangement is that the connector can be designed as an independent unit, particularly with regard to ram piston size and travel.

An advantage of the connector is that it can easily be fitted to hydraulic systems as it uses existing hydraulic service lines for it's operation.

It will be appreciated that various different arrangements of alternating valve may be provided. For example, the valves need not necessarily be mounted on a common spindle. The preferred construction will ensure that both valves may not be closed at the same time.

Connecting implements to a machine is further facilitated in that rams may be used to mount and secure the implement thereon automatically once the system is connected.

In the direct system an extra line is fitted, connecting the rear of the piston area with the pressure regulator on the tank line. This hose would evacuate the oil at rear of the piston during engagement, drain off any leakages during normal operation, and effect disengagement as soon as the present pressure was induced, without the use of any spool or the need for an alternating valve.

A combination of the two systems is also possible as follows. Using the extra hose connected as in the direct system, but with the addition of a non return valve. The extra hose would be used for engagement and to ensure against pressure build-up at the rear of the piston, but disallowing direct application of pressure induced in the tank line, and requiring the use of a designated spool and an alternating valve.

Among the advantages of this system are: (1) where manifolds are used in series, different manifolds can be controlled by their designated spools, using one pressure regulator; (2) the leakage valves which would be needed in a multi-coupling manifold, for each coupling not connected to the alternating valve could be dispensed with; (3) adequate evacuation of oil during engagement, without undesirable enlargement of the alternating valve; and (4) enhanced provision against inadvertant pressure build-up at the rear of the piston.

It will be appreciated that any suitable materials of construction may be used for the connecting device.

The invention is not limited to the embodiments hereinbefore described which may be varied in both construction and detail.

## Claims

1. A connector (1) for line couplings of a fluid powered system of the type comprising a supply mounting support (2) for a supply coupling (3) connected to a fluid supply line and a take-off mounting support (4) for a take-off coupling (5) connected to a fluid take-off line and engagement means for moving the mounting supports (2, 4) relative to each other to engage and disengage the couplings (3, 5), characterised in that the engagement means is operated by the fluid in a supply line.

2. A connector as claimed in Claim 1 in which the engagement means is on the supply mounting support (2) and comprises a ram (7) including a cylinder (15) and a double acting piston (16) having front and rear faces (21, 22), the piston dividing the cylinder into a front chamber (17) and a rear chamber (18), and having a con rod (22) and catch means (6) on the front face (21) of the piston (16) for co-operation with a receiver formed in the take off mounting support (4).

3. A connector (1) as claimed in Claim 2 in which the fluid supply line is connected through a non-return valve (28) to the front chamber (17) of the cylinder (15) and the rear chamber (18) is vented into a storage reservoir of the system and valve means (25) is provided for fluid pressure equalisation within the cylinder (15).

4. A connector (1) as claimed in claim 2 or claim 3 in which there is provided an alternating valve (32) having an open outlet (38) and a pair of valved inlets (36, 37), one of which is closed when the fluid pressure applied to that inlet (36, 37) is greater than the pressure applied to the other inlet (36, 37) and in which each inlet (36, 37) is connected to two supply lines, the pair together forming a system feed and return, and in which the outlet (38) is connected to the rear chamber (18) of the cylinder (15) and additionally each supply line is connected by a non-return valve (28) to the front chamber (17) of the cylinder (15).

5. A connector (1) as claimed in Claim 4 in which the alternating valve (32) includes a bore (35) with a valve seat (36, 37) formed at each end, communicating intermediate its ends with an outlet port (38), a pair of valve heads (39, 40) interconnected by a spindle (41) within the bore (35), the length of which spindle (41) is such as to prevent both valve heads (39, 40) seating simultaneously, and the cross-sectional area of the spindle (41) relative to the bore (35) being such as to permit the free flow of fluid therebetween.

6. A connector as claimed in Claim 4 or Claim 5 in which intermediate the outlet (38) of the alternating valve (32) and the rear chamber (18) there is provided a shut-off valve openable only within a pre-set range of ram disengagement pressures.

7. A connector as claimed in Claim 6 in which the shut-off valve comprises: an inlet bore (91) communicating with an outlet bore (92) a flow restrictor (93) in one of the bores (91, 92); a transverse bore (94) across the outlet bore (92), one end of which communicates with the inlet bore (91); the transverse bore (94) housing in a fluid tight manner a slidable plug (97) spring biased against the fluid pressure from the inlet bore (91), the body of the plug (97) at a transfer position (99) intermediate its ends being so formed as to permit the flow of fluid across the transverse bore (94) when the transfer position (99) is aligned with the outlet bore (92); and a non-return valve (101) in the outlet bore (92) between the transverse bore (94) and the rear chamber (18) communicating with the inlet bore (91).

8. A connector as claimed in any of Claims 2 to 7 in which there is incorporated a pressure stablilising expansion device for the rear chamber (18) of the cylinder (15).

9. A connector as claimed in Claim 8 in which the pressure stabilising expansion device comprises a spring loaded piston (82) mounted in the cylinder (15) remote from the rear face (20) of the piston (16).

10. A connector as claimed in any of Claims 2 to 9 in which the catch means (6) comprises a male member having a main body portion and an outer expansion member movable outwards on retraction of the piston (16) for engagement within a socket (8) forming the receiver.

11. A connector as claimed in Claim 10 in which the male member comprises: a cylindrical body (45); a head (47) formed on its free end of frusto conical shape; and a circumferential groove (48) rearward of the head (47), the depth of which reduces towards the head (47), and in which the outer expansion member comprises: a sleeve (50) slidable on the cylindrical body (45), the sleeve (50) retaining a plurality of ball bearings (52) within the groove (48) by a series of circumferentially arranged holes (53) in the sleeve (50), the diameter of the ball bearings (52) being greater than the diameter of the holes (53) and of the depth of the groove (48); and an outwardly biased rubbing ring (55) on the sleeve (50) for engagement within the supply mounting support (2).

12. A connector as claimed in any of Claims 2 to 9 in which the catch means comprises a flange (122) mounted on the con-rod (22) and the receiver is an open slot (125) in a plate (123) forming part of the take-off mounting support.

Fig. 1

Fig.2

EP 0 319 231 A1

Fig.3(a)

Fig. 3 (b)

Fig. 3(d)

Fig. 3(c)

Fig. 5

Fig. 6

Fig. 4

EP 0 319 231 A1

Fig. 7

Fig. 8

EP 0 319 231 A1

Fig. 9

EP 0 319 231 A1

Fig.11

Fig.10

Fig.13

Fig.12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 653 405 (NELSON) <br> * Column 4, line 51 - column 5, line 20; figures * <br> --- | 1,2,3 | F 16 L 37/00 |
| A | DE-A-3 023 359 (WALTHER) <br> * Figure 1 * <br> ----- | 1,2,10, 11 | |

**TECHNICAL FIELDS SEARCHED (Int. Cl.4)**

F 16 L

The present search report has been drawn up for all claims

| Place of search | Date of completion of the search | Examiner |
|---|---|---|
| THE HAGUE | 08-03-1989 | HUBEAU M.G. |

EPO FORM 1503 03.82 (P0401)